**Europäisches Patentamt**

**European Patent Office**

**Office européen des brevets**

(11) Veröffentlichungsnummer : **0 354 875 B1**

(12) # EUROPÄISCHE PATENTSCHRIFT

(45) Veröffentlichungstag der Patentschrift :
**13.05.92 Patentblatt 92/20**

(51) Int. Cl.$^5$ : **A01M 1/02, A01M 1/14**

(21) Anmeldenummer : **89810585.3**

(22) Anmeldetag : **03.08.89**

(54) **Falle für Fluginsekten, insbesondere Nahrungsmittelmotten.**

(30) Priorität : **10.08.88 CH 3017/88**

(43) Veröffentlichungstag der Anmeldung :
**14.02.90 Patentblatt 90/07**

(45) Bekanntmachung des Hinweises auf die
Patenterteilung :
**13.05.92 Patentblatt 92/20**

(84) Benannte Vertragsstaaten :
**AT CH DE ES FR GB IT LI NL**

(56) Entgegenhaltungen :
**EP-A- 0 026 419**

(56) Entgegenhaltungen :
**CH-A- 614 349**
**JOURNAL OF ECONOMIC ENTOMOLOGY. vol.
70, no. 4, August 1977, COLLEGE PARK, MA-
RYLA Seiten 489 - 492; D.J.CULVER et
al:"Contribution to the Use of the Synthetic
Pheromone in Monitoring Codling Moth Populations "**

(73) Patentinhaber : **CIBA-GEIGY AG**
**Klybeckstrasse 141**
**CH-4002 Basel (CH)**

(72) Erfinder : **Hoppe, Thomas, Dr.**
**Waldhofstrasse 2**
**CH-4310 Rheinfelden (CH)**

EP 0 354 875 B1

## Beschreibung

Die Erfindung betrifft eine Falle für Fluginsekten gemäss Oberbegriff des Patentanspruchs 1.

Weltweit gefährden vorratschädliche Insekten die Nahrungsmittelhaltung und Nahrungsmittelproduktion. Zu den besonders gefährlichen Insekten gehören in Lagerräumen verschiedene Arten von Motten. Eine prophylaktische Schädlingsbekämpfung ist zumeist nicht möglich, denn der Einsatz von Pestiziden und Insektiziden ist mit Rückständen verbunden, die schädliche Wirkstoffe enthalten und für Menschen gesundheitsschädlich sein könnten. Man versucht deshalb, zunächst verlässliche Aussagen über das Vorhandensein bzw. die Populationsdichte der Schädlinge zu erhalten, um erst dann gezielte Massnahmen zu ergreifen. Aussagen über die Populationsdichte von Schädlingen geben Indikatoren in Form von Fallen, die verteilt aufgestellt oder aufgehängt werden. In festgelegten Zeitintervallen zählt man die gefangenen Tiere, um bei Ueberschreiten eines aus der Erfahrung bekannten Schwellenwerts eine Schädlingsbekämpfung durchzuführen.

Zunehmend werden solche mit Lockmitteln ausgestattete Indikatoren auch zur Schädlingsbekämpfung eingesetzt. Die Lockmittel ködern die Schädlinge. Als Lockmittel werden weibliche Sexualhormone, die sogenannten Pheromone verwendet. Ueberraschend werden mit den Pheromonen Männchen und auch - wenn auch in geringerem Umfang - Weibchen angelockt. Die Pheromone werden zumeist in kleinen Behältern geliefert, aus denen durch Verdunsten eine über der Zeit konstante Menge des Wirkstoffes frei wird und die Schädlinge anlockt. Diese Behälter werden an der Falle befestigt.

Die Fallen sind oft als herabhängender klebender Folienstreifen (Fliegenfalle) oder Trichterfalle ausgebildet. Bei der Trichterfalle gelangt der Schädling in einen Raum, den er wegen des trichterförmigen Eingangs nicht mehr verlassen kann. Ein anderer Fallentyp, die sogenannte Delta-Falle (Δ-Falle) ist beispielsweise in der EP-A-26,419 und im Journal of Economic Entomology, vol. 70, No. 4, Aug. 1977, College Park, Maryla beschrieben. Dieser Fallentyp besteht im wesentlichen aus einem Stück Karton oder Plastik, das etwa zu einem Dreieck geformt ein häuschenförmiges Aussehen erhält. Der Boden der Falle wird wie die Fliegenfalle mit einem nicht trocknenden Kleber bestrichen oder mit einem Insektizid versetzt.

Bei dem bekannten Fliegenfänger wird das Pheromon in einem mitgelieferten Behältnis auf etwa halber Länge des klebenden Streifens befestigt. In der Delta-Falle wird es in die Mitte des Bodenteils gesetzt und bei der Trichterfalle in den Raum, in dem die Schädlinge gefangen werden.

Die Fliegenfalle erweist sich als Mottenfalle sehr erfolgreich. Sie ist einfach und billig herzustellen. Eine solche Fliegenfalle in Verbindung mit einem Pheromon ist z.B. in der schweizer Patentschrift Nr. 614 349 beschrieben. Nachteilig ist, dass der Kleber ungeschützt im Raum hängt und dass die Falle unter Umständen schnell verstaubt und unsauber wirkt. In niedrigen Räumen kann der Kleber unabsichtlich berührt werden.

Demgegenüber schützt die Dachform der Delta-Falle bzw. auch die geschlossene Trichterfalle gegen versehentliches Berühren und auch der Staubbefall wird reduziert. Der Einsatz von handelsüblichen Delta-Fallen als Bioindikatoren in Lagerräumen ist aber insofern problematisch als in diese Fallen nicht von allen Seiten eingesehen werden kann. Sind die Fallen hoch aufgehängt, muss zum Ablesen des Fangergebnisses auf einen Schemel oder eine Leiter gestiegen werden. Vorteilhaft ist bei den Delta-Fallen ihre Konstruktion. Durch einfaches Falten eines Karton- oder Plastikzuschnitts kann schnell das etwa dreieckförmige Häuschen gebildet werden. Demgegenüber weist die Trichterfalle einen relativ hohen konstruktiven Aufwand auf. In einer vergleichenden Studie in einer Dissertation an der Eidgenössischen Technischen Hochschule Zürich, Diss. ETH Nr. 6837 wurde festgestellt, dass die Delta-Fallen und die Trichterfallen als Mottenfallen weniger erfolgreich sind.

Die Erfindung löst nun das Problem, derartige Fallen für Schädlinge, insbesondere Nahrungsmittelmotten, zu verbessern, so dass sie hervorragend als Bioindikatoren und auch bei der Schädlingsbekämpfung eingesetzt werden können. Dies wird im wesentlichen durch das im Kennzeichen des Patentanspruchs 1 aufgeführten Merkmal erreicht. Der optische Anreiz dient den Schädlingen als Anflughilfe.

In einer bevorzugten Ausführung der Erfindung wird bei einer Delta-Falle die Klebefläche auf beiden Oeffnungsseiten der Falle verlängert und gibt den Schädlingsmotten einen grossen, leicht anzufliegenden Zugang zu der Falle.

In einer besonders bevorzugten Ausführungsform der Erfindung erhält eine Delta-Falle einen durchsichtigen Boden und ermöglicht so bei hoch aufgehängten Fallen das Ablesen des Fangergebnisses von unten.

Im folgenden wird die Erfindung anhand eines in den Zeichnungen dargestellten Ausführungsbeispiels erläutert, es zeigen:

Fig. 1 den Zuschnitt einer Delta-Falle,

Fig. 2 einen Zylinder als optischen Anreiz,

Fig. 3 einen Streifen als optischen Anreiz,

Fig. 4 ein Prisma als optischen Anreiz,

Fig. 5 zwei ineinander verschränkte Streifen als optischen Anreiz,

2

EP 0 354 875 B1

Fig. 6 die Delta-Falle mit Streifen gemäss Fig. 3 in Seitenansicht, und

Fig. 7 die Delta-Falle der Fig. 6 in Frontansicht.

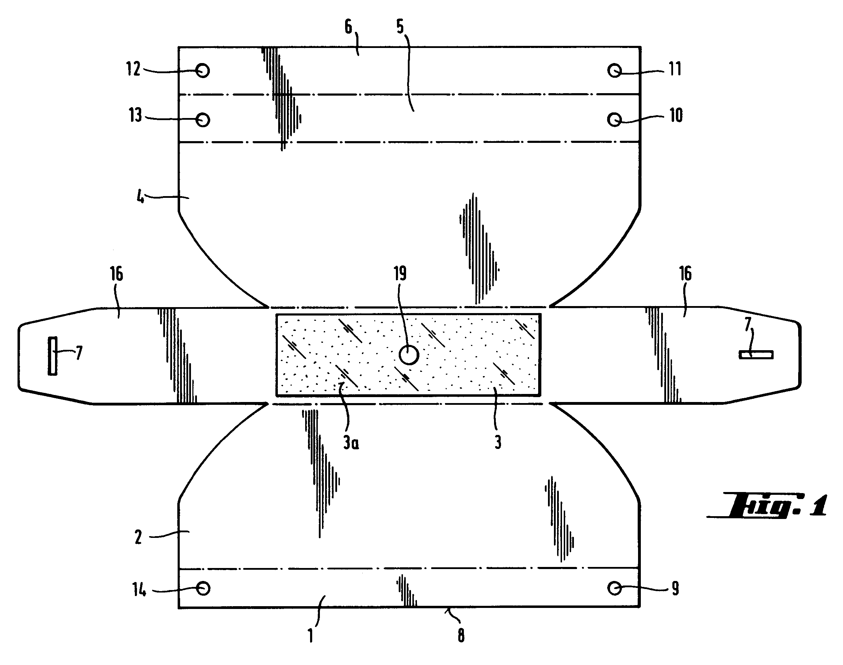

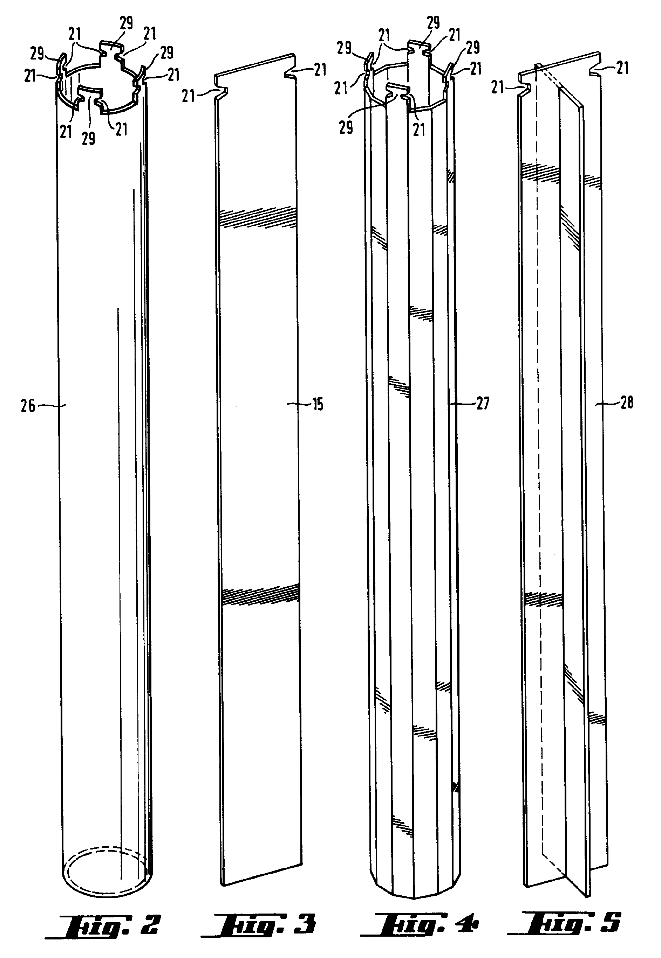

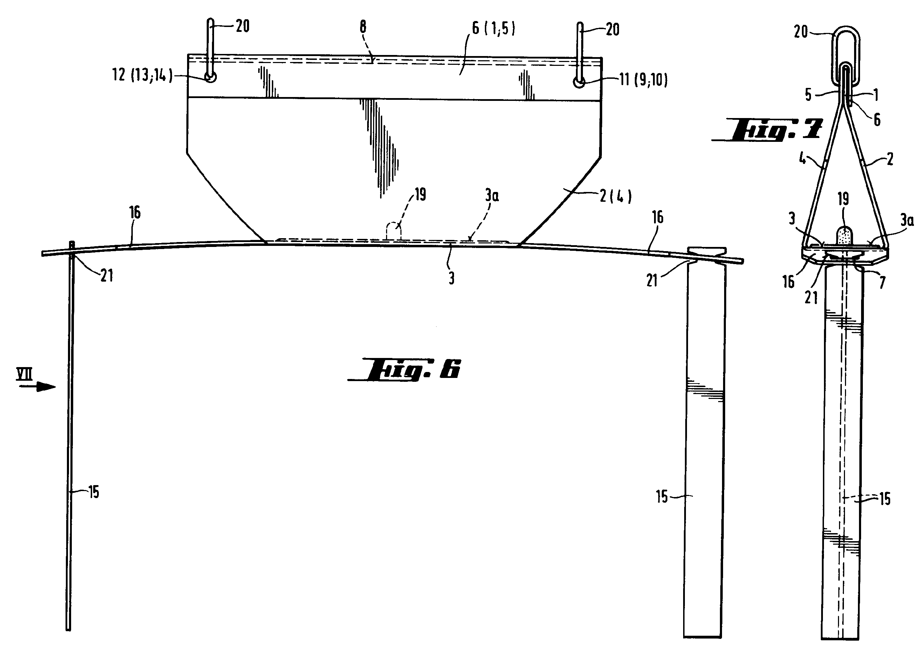

Die in den Figuren 6 und 7 in zwei zueinander senkrechten Seitenansichten gezeigte Delta-Falle wird aus dem "Zuschnitt" der Fig. 1 und zwei des in der Fig. 3 dargestellten Streifens 15 gebildet. Die strichpunktiert dargestellten Falzlinien erleichtern das Falten zu der Häuschenform. Dazu sind zwei Felder 2 und 4 entlang ihren Falzlinien mit einer Grundfläche 3 zu einem Dreieck gefaltet. Die Felder 5 und 1 sind bei der fertigen Falle plan aufeinander gedrückt. Eine Lasche 6 ist um die Kante 8 herum auf das Feld 1 gefaltet. Die Felder 1 , 5 und 6 werden mit zwei Klammern 20 fixiert und zusammengehalten. Dabei führen die beiden ringförmigen Klammern 20 durch die Löcher 9, 10, 11 bzw. 12, 13, 14, die durch den Faltvorgang zur Deckung gebracht sind.

Die Grundfläche 3 ist mit einem nicht trocknenden Kleber 3a in dem Bereich bestrichen, der von den Deckflächen 2 und 4 geschützt wird Kleber 3a und Grundfläche 3 sind durchsichtig.

In der Mitte der mit dem Kleber 3a bestrichenen Fläche 3 ist eine Kapsel 19 mit einem Pheromon eingesetzt. Zwei Streifen 15 sind in vorbereitete Schlitze 7 eingefügt, zur Fixierung dienen ihre Kerben 21.

Die mit dem Kleber 3a bestrichene Grundfläche 3 ist zum Ablesen d.h. Zählen der gefangenen Tiere bei hoch aufgehängten Fallen durchsichtig. Der übrige Teil der Falle kann farbig sein, die Streifen 15 müssen gut sichtbar sein. Die grossen Eingangsöffnungen der Falle erleichtern zusammen mit den Anflugflächen 16 den Motten den Zugang zu der Falle. Die Streifen dienen den Motten als optischer Anreiz zum Anflug. Hier wird die Erkenntnis ausgenutzt, dass Schädlingsmotten bevorzugt vertikal angeordnete Streifen anfliegen. Diese Streifen dienen der Motte als optischer Anreiz zusätzlich zu dem Pheromon. Als Seitenverhältnis - Höhe zu Breite - eines solchen Streifens sind bereits Werte von grösser als 4:1 geeignet. Gute Fangergebnisse werden im Bereich von 7:1 bis 12:1 erzielt. Ein Seitenverhältnis von etwa 10:1 hat sich dabei als optimal erwiesen.

Die Streifen können selbstverständlich auch mit einem Kleber bestrichen sein. Dabei ergeben sich dann aber die gleichen Nachteile wie bei dem bekannten Fliegenfänger, d.h. der Streifen verstaubt und verschmutzt leicht.

Um den Schädlingen einen von zwei Seiten optimal sichtbaren Anreiz zu geben, sind die beiden Streifen 15 senkrecht zueinander angeordnet. Besonders gut sind aus diesem Gesichtspunkt Zylinder 26 (Fig. 2) oder Prismen 27 (Fig. 4) geeignet. Zylinder und Prismen können aus leichtem Schaumstoff, Styropor oder hohl aus Karton oder Kunststoffolie gefertigt sein. Ihre streifenförmige Silhouette bietet den Motten von allen Seiten den optimalen optischen Anreiz. Als weitere Formen sind ineinander verschränkte Streifen 28 (Fig. 5) gut geeignet.

Wie erwähnt können zur Befestigung der Streifen 15 Schlitze 7 im Boden der Falle dienen. Bei ineinander verschränkten Streifen 28 mit kreuzförmigem Querschnitt kann ein Streifen etwas länger ausgeführt und mit dem verlängerten Teil in einen vorbereiteten Schlitz gesteckt werden. Auch hier können Kerben 21 zur besseren Fixierung des Streifens 28 vorgesehen sein. Eine dem Querschnitt angepasste kreuzförmige Schlitzung in der Falle ist natürlich ebenso möglich. Bei einem aus Karton oder Kunststoffolie gefertigten Zylinder 26 können mehrere Laschen 29 mit Kerben 21 zur Befestigung dienen, die in entsprechend angeordnete Schlitze am Boden der Falle gesteckt werden. Für nicht hohle Zylinder sind auch ausgestanzte Kreise im Boden der Falle geeignet, wobei eine Kerbung entlang des Umfangs dem Zylinder die nötige Fixierung gibt. In einem solchen Vollzylinder, z.B. aus Styropor oder Schaumstoff, kann auch bereits bei der Herstellung ein kurzer Streifen aus Karton eingearbeitet werden, der als Lasche vorsteht und zur Befestigung in einem Schlitz dient. Natürlich können Vollzylinder und auch Vollprismen auch einfach an den Boden der Falle geklebt werden.

Mit der dargestellten Falle werden besonders gute Fangergebnisse erzielt. Der durchsichtig ausgelegte Boden erlaubt einen schnellen Ueberblick, ob und gegebenenfalls wieviele Schädlinge gefangen wurden. Das Ködern der Schädlinge durch Pheromone und die zusätzlichen optischen Anreize machen diese Fallen nicht nur als Bioindikator geeignet sondern ermöglichen bereits eine für die Nahrungsmittelhaltung ungefährliche Schädlingsbekämpfung.

Die dargestellte Falle stellt wie bereits bei den Streifen diskutiert nur eine der vielen möglichen Ausführungsformen dar. Viele Variationen sind möglich. Beispielsweise kann die Dachkonstruktion anders ausgeführt sein. Bei einem verlängerten "Dachfirst" könnten die Streifen dort an den verlängerten Enden herabhängend befestigt sein. Wichtig sind für die Delta-Falle die grossen Oeffnungen mit den Anflugflächen und der durchsichtige Boden zum einfachen Ablesen des Fangergebnisses.

Beliebigen Fallen optische Anreize hinzuzufügen und damit das Fangergebnis zu vebessern ist das eigentliche Ziel der Erfindung. So werden auch bei Trichterfallen oder scheibenförmigen Fallen oder dergleichen durch das Anbringen von optischen Anreizen - bei den Nahrungsmittelmotten in Form von vertikalen Streifen - die Fangergebnisse erheblich verbessert.

Die vertikalen Streifen müssen nicht unbedingt als separat herabhängende Bänder oder längliche Körper ausgebildet sein. Weist die Falle eine geeignete Fläche auf, so können die Streifen beispielsweise dort aufgeklebt, aufgemalt oder aufgedruckt sein.

3

## EP 0 354 875 B1

**Patentansprüche**

1. Falle für Fluginsekten, insbesondere Nahrungsmittelmotten, mit einem Gehäuse, welches einen etwa dreieckförmigen, trapezförmigen, rechteckförmigen, kreisförmigen, ellipsenförmigen oder dergleichen Querschnitt aufweist, insbesondere Delta-Falle, dadurch gekennzeichnet, dass an dem Gehäuse ein separates opakes Element (15,26,27,28) angeordnet ist, das eine Länge von mindestens 20 cm und ein Verhältnis von Länge zu Breite grösser als 4:1 aufweist, und das als optischer Anreiz auf die Insekten wirkt.

2. Falle nach Anspruch 1, dadurch gekennzeichnet, dass das Verhältnis von Länge zu Breite der Elemente (15, 26, 27, 28) votzugsweise im Bereich von 7:1 bis etwa 12:1 liegt, insbesondere etwa 10:1.

3. Falle nach Anspruch 1 oder 2, dadurch gekennzeichnet, dass das Element ein Streifen (15) aus dünnem Material, insbesondere Karton, Kunststoff oder dergleichen ist.

4. Falle nach Anspruch 1 oder 2, dadurch gekennzeichnet, dass das Element ein Zylinder oder Prisma aus leichtem Material, insbesondere geschäumtem Kunststoff ist.

5. Falle nach Anspruch 1 oder 2, dadurch gekennzeichnet, dass das Element ein Hohlzylinder (26) oder ein Hohlprisma (28) aus dünnem Karton, Kunststoffolie oder dergleichen ist.

6. Falle nach Ansptuch 1 oder 2, dadurch gekennzeichnet, dass das Element ein im Querschnitt kreuzförmiger Körper (28) aus dünnem Material, insbesondere Karton, Kunststoffolie oder dergleichen ist.

7. Falle nach einem oder mehreren der vorangehenden Ansprüche, dadurch gekennzeichnet, dass mehrere Elemente (15, 26, 27, 28) so angeordnet sind, dass zumindest aus zwei zueinander senkrechten Seitenansichten eines der Elemente (15, 26, 27, 28) in seiner vollen Breite sichtbar ist.

8. Falle nach einem oder mehreren der vorangehenden Ansprüche, dadurch gekennzeichnet, dass n Elemente (15, 26, 27, 28) so angeordnet sind, dass aus n Seitenansichten, von denen zwei in jeweils gleich grossem Winkel 360/n aufeinander folgen, eines der Elemente in voller Breite sichtbar ist.

9. Falle nach einem oder mehreren der vorangehenden Ansprüche mit einem in der Gebrauchslage etwa horizontalen Boden, der zumindest teilweise mit einem Kleber bestrichen ist, dadurch gekennzeichnet, dass mindestens ein Element (15, 26, 27, 28) unterhalb des Bodens herabhängend befestigt ist, vorzugsweise in einem oder mehreren passend zu einem Befestigungsteil des Elements (15, 26, 27, 28) geformten Schlitz(en).

10. Falle nach einem oder mehreren der vorangehenden Ansprüche, dadurch gekennzeichnet, dass der Boden (3) beidseitig der Zugangsöffnungen verlängert ist und dass an den äusseren Enden der Verlängerungen (16) je mindestens ein Element (15, 26, 27, 28) herabhängend befestigt ist.

11. Falle nach einem oder mehreren der vorangehenden Ansprüche, dadurch gekennzeichnet, dass zumindest der Teil des Bodens (3) der mit einem Kleber 3a bestrichen ist, durchsichtig ist, und dass auch die Klebschicht durchsichtig ist.

**Claims**

1. A trap for flying insects, especially moths that attack foodstuffs, comprising a housing that has an approximately triangular, trapezoid, rectangular, circular, elliptical or the like cross-section, especially a delta trap, wherein there is arranged on the housing a separate opaque element (15, 26, 27, 28) that has a length of at least 20 cm and a length to width ratio of greater than 4:1 and that acts as an optical attractant for the insects.

2. A trap according to claim 1, wherein the length to width ratio of the elements (15, 26, 27, 28) is preferably in the range of from 7:1 to approximately 12:1, especially approximately 10:1.

3. A trap according to claim 1 or 2, wherein the element is a strip (15) of thin material, especially cardboard, plastics material or the like.

4. A trap according to claim 1 or 2, wherein the element is a cylinder or prism of light-weight material, especially foamed plastics material.

5. A trap according to claim 1 or 2, wherein the element is a hollow cylinder (26) or a hollow prism (28) of thin cardboard, plastics film or the like.

6. A trap according to claim 1 or 2, wherein the element is a body (28) of thin material, especially cardboard, plastics film or the like, which is cross-shaped in cross-section.

7. A trap according to one or more of the preceding claims, wherein several elements (15, 26, 27, 28) are so arranged that the full width of an element (15, 26, 27, 28) is visible at least from two mutually perpendicular side views.

8. A trap according to one or more of the preceding claims, wherein n elements (15, 26, 27, 28) are so arranged that the full width of an element is visible from n side views, of which each successive view follows from the previous one at the same angle of 360/n.

4

9. A trap according to one or more of the preceding claims having a base which is approximately horizontal in the use position, which base is at least partially coated with an adhesive, wherein at least one element (15, 26, 27, 28) is fastened so as to hang down beneath the base, preferably in one or more slot(s) shaped to fit a fastening portion of the element (15, 26, 27, 28).

10. A trap according to one or more of the preceding claims, wherein the base (3) is extended on both sides of the entry openings and at least one element (15, 26, 27, 28) is fastened so as to hang down from each of the outer ends of the extensions (16).

11. A trap according to one or more of the preceding claims, wherein at least that portion of the base (3) which is coated with an adhesive 3a is transparent and the layer of adhesive is also transparent.

## Revendications

1. Piège pour insectes volants, notamment des mites parasitant les produits alimentaires, le piège comportant une enceinte présentant une section transversale ayant approximativement une forme triangulaire, de trapèze, rectangulaire ou carrée, circulaire, en ellipse ou une forme analogue, en particulier piège en delta, caractérisé en ce qu'un élément opaque (15, 26, 27, 28) séparé est fixé sur l'enceinte, cet élément ayant une longueur d'au moins 20 cm et présentant un rapport entre sa longueur et sa largeur supérieur à 4:1, et en ce que cet élément exerce sur les insectes un effet d'attraction optique.

2. Piège selon la revendication 1, caractérisé en ce que le rapport entre la longueur et la largeur des éléments (15, 26, 27, 28) se situe avantageusement dans l'intervalle allant de 7:1 à environ 12:1 et se situe notamment au voisinage de 10:1.

3. Piège selon la revendication 1 ou 2, caractérisé en ce que l'élément est une bande (15) en une matière mince, en particulier du carton, de la matière plastique ou une matière analogue.

4. Piège selon la revendication 1 ou 2, caractérisé en ce que l'élément est un cylindre ou un prisme ou cylindre prismatique en une matière légère, notamment en une mousse de matière plastique.

5. Piège selon la revendication 1 ou 2, caractérisé en ce que l'élément est un cylindre creux (26) ou un prisme creux ou cylindre prismatique (28) creux formé d'un carton mince, d'une feuille mince de matière plastique ou d'une matière analogue.

6. Piège selon la revendication 1 ou 2, caractérisé en ce que l'élément est un corps (28) ayant en section transversale une forme de croix et ce corps étant en une matière mince, notamment du carton, une feuille de matière plastique ou une matière analogue.

7. Piège selon une ou plusieurs des revendications précédentes, caractérisé en ce que plusieurs éléments (15, 26, 27, 28) sont disposés de façon que, d'au moins deux points de vue latéraux perpendiculaires l'un à l'autre, l'un des éléments (15, 26, 27, 28) est visible avec la totalité de sa largeur.

8. Piège selon une ou plusieurs des revendications précédentes, caractérisé en ce que n éléments (15, 26, 27, 28) sont disposés de façon en ce qu'à partir de n points de vue, dont deux se suivent à chaque fois selon un angle de 360 / n de même grandeur, l'un des éléments doit être vu en présentant la totalité de sa largeur.

9. Piège selon une ou plusieurs des revendications précédentes, comportant un fond approximativement horizontal dans sa position d'utilisation et qui est revêtu au moins partiellement d'une colle, piège caractérisé en ce qu'au moins un élément (15, 26, 27, 28) est fixé au-dessous du fond dont il pend, avantageusement dans une ou plusieurs fentes formées de manière à correspondre à une partie, à rôle de fixation, de l'élément (15, 26, 27, 28).

10. Piège selon une ou plusieurs des revendications précédentes, caractérisé en ce que le fond (3) est prolongé des deux côtés des ouvertures d'accès et en ce qu'aux extrémités extérieures des prolongements (16) au moins un élément (15, 26, 27, 28) est à chaque fois fixé en y étant suspendu.

11. Piège selon une ou plusieurs des revendications précédentes, caractérisé en ce qu'au moins la partie du fond (3), revêtue (par des stries) d'une colle(3a) est transparenter et en ce que la couche de colle est également transparente.

Fig. 1

*Fig. 2*　　*Fig. 3*　　*Fig. 4*　　*Fig. 5*

Fig. 7

Fig. 6